# FASCICULE DE BREVET EUROPEEN

(11) **EP 1 375 893 B1**
(45) Date de publication et mention de la délivrance du brevet: **29.11.2006**
(21) Numéro de dépôt: 03291514.2
(22) Date de dépôt: 20.06.2003
(51) Int. Cl.: F02M 25/07

(54) **Dispositif de recirculation des gaz d'échappement pour moteur à allumage commandé suralimenté**
Abgasrückführvorrichtung für aufgeladene fremdgezündete Brennkraftmaschine
Exhaust gas recirculation device for spark ignited turbocharged internal combustion engine

(30) Priorité: 21.06.2002 FR 0207722
(43) Date de publication de la demande: 02.01.2004
(73) Titulaire: Renault s.a.s., 92100 Boulogne Billancourt (FR)
(72) Inventeur: Duchaussoy, Yorick, 92500 Rueil Malmaison (FR); Ferri, Pascal, 91210 Draveil (FR)
(74) Mandataire: Cémeli, Eric Philippe Laurent

(56) Documents cités:
- PATENT ABSTRACTS OF JAPAN vol. 1997, no. 09, 30 septembre 1997 (1997-09-30) -& JP 09 126061 A (ISHIKAWAJIMA SHIBAURA MACH CO LTD), 13 mai 1997 (1997-05-13)
- PATENT ABSTRACTS OF JAPAN vol. 016, no. 343 (M-1285), 24 juillet 1992 (1992-07-24) -& JP 04 103867 A (NISSAN MOTOR CO LTD), 6 avril 1992 (1992-04-06)
- PATENT ABSTRACTS OF JAPAN vol. 1999, no. 08, 30 juin 1999 (1999-06-30) -& JP 11 062722 A (ISUZU MOTORS LTD), 5 mars 1999 (1999-03-05)
- PATENT ABSTRACTS OF JAPAN vol. 016, no. 434 (M-1308), 10 septembre 1992 (1992-09-10) -& JP 04 148012 A (NISSAN MOTOR CO LTD), 21 mai 1992 (1992-05-21)

## Description

La présente invention concerne un dispositif de recirculation pour moteur à allumage commandé suralimenté.

Il est de plus en plus courant d'utiliser un turbo compresseur pour des moteurs à allumage commandé fonctionnant avec un mélange air carburant stoechiométrique (richesse 1). Dans ce cas, l'axe du compresseur correspond à l'axe d'une turbine entraînée par les gaz d'échappement du moteur.

Cependant, l'utilisation d'un turbo compresseur nécessite dans certaine condition l'enrichissement du mélange air-carburant afin de respecter les contraintes thermiques admissibles au niveau des soupapes et de la turbine. Cet enrichissement permet également de prévenir le cliquetis dû à l'auto-inflammation du carburant dans les cylindres.

L'enrichissement du mélange en carburant, même s'il donne des résultats satisfaisants en terme de respect des contraintes thermiques et de prévention du cliquetis, engendre une surconsommation importante et une augmentation du niveau des polluants, notamment hydrocarbure et monoxyde de carbone, dans les gaz d'échappement.

Le document WO 0100981 fournit une solution consistant en un circuit de recirculation des gaz d'échappement d'un moteur à allumage commandé. Selon ce document, le circuit de recirculation des gaz d'échappement comprend une conduite connectée à l'une des deux soupapes d'échappement de chaque cylindre. Cette conduite se divise en deux conduites secondaires pour se connecter d'une part au collecteur d'admission au travers d'un refroidisseur et d'autre part à la ligne d'échappement en aval de la turbine. Le débit dans chaque conduite secondaire est contrôlé par deux vannes. Selon ce document, les gaz d'échappement circulant dans la conduite de recirculation des gaz d'échappement n'entraînent pas la turbine. Par conséquent, cette solution modifie sensiblement la gestion du fonctionnement de la turbine.

De plus, la géométrie du circuit de recirculation des gaz d'échappement entraîne une modification importante du collecteur d'échappement. Enfin, cette solution nécessite la mise en place d'un refroidisseur supplémentaire.

Le document JP09126061 décrit le préambule de la revendication 1.

La présente invention a pour but de proposer un circuit de recirculation des gaz d'échappement pour moteur à allumage commande suralimenté de conception simple et permettant de réduire la consommation et le niveau des polluants dans les gaz d'échappement.

Ce but est atteint par un circuit de recirculation des gaz d'échappement d'un moteur à allumage commandé suralimenté, la suralimentation étant obtenu par un compresseur dont l'axe de rotation est commun avec l'axe de rotation d'une turbine entraînée par les gaz d'échappement, le circuit d'admission du moteur comprenant un refroidisseur d'air en aval du compresseur, le circuit de recirculation des gaz d'échappement est caractérisé en ce qu'il comprend une conduite connectée d'une part sur le collecteur d'échappement en amont de la turbine et d'autre part sur le circuit d'admission entre le compresseur et le refroidisseur d'air, la conduite comprend également une dérivation connectant la conduite sur le circuit d'admission en amont du compresseur, la conduite comprenant des moyens d'ajustage du débit de gaz traversant la conduite et des moyens de sélection orientant les gaz recirculés soit dans la conduite soit dans sa dérivation.

Un autre but de l'invention est de proposer une utilisation du circuit de recirculation des gaz d'échappement afin d'augmenter les performances du moteur.

Ce but est atteint en utilisant le circuit de recirculation des gaz d'échappement selon l'invention lors des phases de suralimentation du moteur de sorte que les moyens d'ajustage sont actionnés pour que le taux de recirculation des gaz d'échappement à l'admission soit compris entre 5 et 20%.

D'autres particularités et avantages de la présente invention apparaîtront plus clairement dans la description ci-après faite en référence aux dessins annexés dans lesquels :

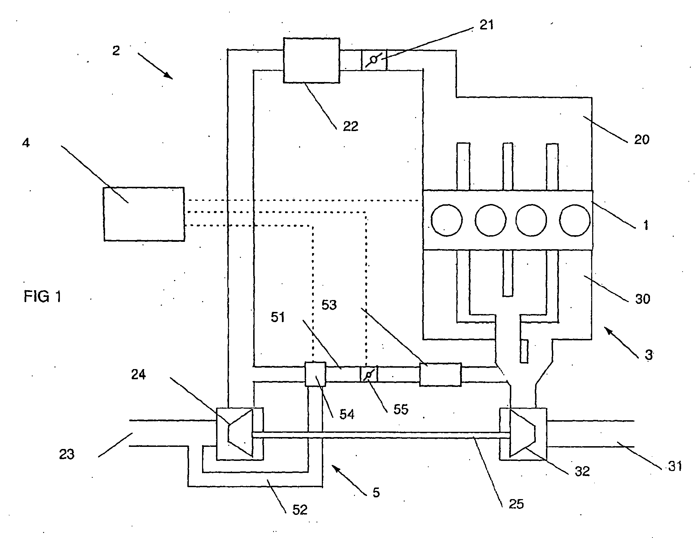

la figure 1 représente un schéma d'un moteur à allumage commandé équipé d'un circuit de recirculation des gaz d'échappement selon l'invention.

L'invention va à présent être décrite en référence à la figure 1. Comme indiqué précédemment la présente invention s'applique à un moteur à allumage commandé suralimenté de structure conventionnelle. De manière connue, le moteur 1 comprend un circuit d'admission 2 s'étendant d'une entrée 23 d'air frais à un collecteur 20 d'admission et un circuit d'échappement s'étendant d'un collecteur 30 d'échappement jusqu'à une sortie d'échappement 31. Le circuit d'admission comprend un volet 21 permettant d'ajuster le débit d'air entrant dans le moteur 1. La suralimentation du moteur 1 est assurée par un compresseur 24 d'air dont l'axe de rotation 25 est solidaire de l'axe de rotation d'une turbine 32 entraînée par les gaz d'échappement sortant du collecteur 30. Le circuit d'admission 2 comprend également classiquement un refroidisseur d'air 22.

Le fonctionnement du moteur 1 notamment le régalage de la quantité d'air, de la quantité de carburant, le déclenchement des phases suralimentées etc... est piloté par une unité de commande électronique UCE 4. De façon connue, cette unité reçoit en entrée un certain nombre de paramètres moteur tel que régime moteur température d'eau vitesse etc. ainsi que la demande conducteur, de façon à ajuster le fonctionnement du moteur 1.

Selon l'invention, le moteur 1 est équipé d'un circuit 5 de recirculation des gaz d'échappement destiné à réintroduire une partie des gaz d'échappement dans le circuit d'admission 2. Le circuit 5 de recirculation comprend une conduite 51 dite principale connectée d'une part au collecteur d'échappement 30 juste en amont de la turbine 32 et d'autre part au circuit d'admission entre le refroidisseur 22 et le compresseur 24. La conduite 51 principale comprend également une dérivation 52 qui met en communication la conduite 51 principale avec le circuit d'admission en amont du compresseur. Le débit de gaz circulant dans la conduite est piloté par l'intermédiaire d'une vanne 55 commandée par l'UCE 4. Tout autre moyen qu'une vanne peut être utilisé.

De même, la conduite 51 principale comprend au niveau de la jonction avec la dérivation, des moyens 54 de sélection afin de diriger les gaz d'échappement en aval ou en amont du compresseur 24. Ces moyens 54 de sélection comprennent, par exemple, une vanne 54 trois voies qui obture la conduite 51 principale en libérant la dérivation et inversement. Une autre solution consiste à utiliser deux vannes, une première sur la conduite principale et une deuxième sur la dérivation 54. Quelle que soit la solution choisie les moyens 54 de sélection sont pilotés par UCE 4 de sorte que lorsque la pression régnant en aval du compresseur 24 est supérieure à la pression régnant en amont de la turbine 32, les gaz d'échappement sont dirigés en amont du compresseur, et lorsque la pression régnant en aval du compresseur 24 est inférieure à la pression régnant en amont de la turbine 32, les gaz d'échappement sont dirigés en aval du compresseur.

Pour augmenter le refroidissement des gaz d'échappement recirculés le circuit 5 de recirculation peut comprendre un refroidisseur 53 en amont de la jonction entre la conduite principale 51 et de la dérivation 52 et si possible en amont de la vanne 55 d'ajustement de la quantité de gaz d'échappement recirculés.

La requérante a constaté qu'en utilisant le circuit 5 de recirculation selon l'invention pour réintroduire des gaz d'échappement à l'admission pendant les phases de suralimentation la consommation du moteur est améliorée sans dégrader les performances. Dans certains cas les performances sont également améliorées.

Comme expliqué précédemment dans les solutions actuelles pour augmenter les performances en phase de suralimentation, il est nécessaire d'augmenter la richesse afin de réduire le niveau de température en amont de la turbine. De même, l'enrichissement s'avère nécessaire pour prévenir l'apparition du cliquetis. Cependant, à forte charge, cette augmentation de richesse augmente la consommation de carburant, multiplie environ par 2 la quantité d'hydrocarbure dans les gaz d'échappement et par 10 la quantité de monoxyde de carbone.

La recirculation des gaz d'échappement entraîne une dilution du mélange et prévient par conséquent l'apparition du cliquetis et diminue également la température avant turbine d'une centaine de degrés pour les points de fonctionnement à forte charge. De plus, le piquage de la conduite 51 principale dans le collecteur 30 d'échappement en amont de la turbine limite l'augmentation de la pression amont turbine.

Les essais ont montrés qu'avec un taux de gaz d'échappement recirculés compris entre 5 et 20% les gains en terme de consommation peuvent atteindre 14% pour des phases de suralimentation dans des zones de fonctionnement à forte charge.

La valeur du taux de gaz d'échappement recirculés en phase de suralimentation dépend essentiellement du régime moteur et de la charge imposée au moteur. D'une manière générale, le taux de gaz d'échappement recirculés augmente avec le régime.

L'introduction de gaz d'échappement à l'admission réduit également le niveau d'hydrocarbure par rapport à la solution d'augmentation de richesse et la quantité d'oxyde d'azote dans les gaz d'échappement.

Cependant, un taux de gaz d'échappement recirculés supérieur à 20% entraîne pour les fortes charges, une augmentation des instabilités de combustion due à l'appauvrissement trop important en oxygène. De même, un taux de gaz d'échappement recirculés inférieure à 5% n'entraîne pas de gain significatif.

Bien entendu, l'invention n'est pas limitée au mode de réalisation qui vient d'être décrit qu'à titre d'exemple.

## Revendications

1. Circuit de recirculation des gaz d'échappement d'un moteur (1) à allumage commandé suralimenté, la suralimentation étant obtenu par un compresseur (24) dont l'axe de rotation (25) est commun avec l'axe de rotation d'une turbine (32) entraînée par les gaz d'échappement, le circuit d'admission (2) du moteur comprenant un refroidisseur (22) d'air en aval du compresseur (24), **caractérisé en ce que** le circuit (5) de recirculation des gaz d'échappement comprend une conduite (51) connectée d'une part sur le collecteur (30) d'échappement en amont de la turbine (32) et d'autre part sur le circuit (2) d'admission entre le compresseur (24) et le refroidisseur d'air (22), la conduite (51) comprend également une dérivation (52) connectant la conduite (51) sur le circuit d'admission (2) en amont du compresseur (24), la conduite comprenant des moyens (55) d'ajustage du débit de gaz traversant la conduite (51) et des moyens pilotés de sélection (54) orientant les gaz recirculés soit dans la conduite (51), lorsque la pression régnant en aval du compresseur (24) est supérieure à la pression régnant en amont de la turbine (32), pour diriger les gaz d'échappement en aval du compresseur (24), soit dans sa dérivation (52), lorsque la pression régnant en aval du compresseur (24) est inférieure à la pression régnant en amont de la turbine (32), pour diriger les gaz d'échappement en amont du compresseur et **en ce que** la conduite (51) comprend un refroidisseur d'air (53).

2. Circuit de recirculation des gaz d'échappement d'un moteur à allumage commandé suralimenté selon la revendication 1, **caractérisé en ce que** le refroidisseur d'air (53) est situé en amont des moyens (55) d'ajustage du débit.

3. Circuit de recirculation des gaz d'échappement d'un moteur à allumage commandé suralimenté selon la revendication 2, **caractérisé en ce que** les moyens d'ajustage comprennent une vanne (55) situé en amont de la dérivation.

4. Circuit de recirculation des gaz d'échappement d'un moteur à allumage commandé suralimenté selon l'une des revendications précédentes, **caractérisé en ce que** les moyens obturateurs comprennent une vanne (54) trois voies obturant la conduite (51) lorsque que la dérivation en ouverte et inversement.

5. Utilisation du circuit de recirculation des gaz d'échappement selon l'une des revendications précédentes, **caractérisée en ce que** lors des phases de suralimentation du moteur (1) les moyens d'ajustage (55) sont actionnés pour que le taux de recirculation des gaz d'échappement à l'admission soit compris entre 5 et 20%.

## Claims

1. Circuit for recirculating the exhaust gases of a supercharged internal combustion engine (1), the supercharging being obtained by a compressor (24) of which the axis of rotation (25) is common with the axis of rotation of a turbine (32) driven by the exhaust gases, the intake circuit (2) of the engine comprising an air cooler (22) downstream of the compressor (24) **characterized in that** the exhaust gas recirculating circuit (5) comprises a line (51) connected to the exhaust manifold (30) upstream of the turbine (32) and to the intake circuit (2) between the compressor (24) and the air cooler (22), the line (51) also comprises a bypass (52) connecting the line (51) to the intake circuit (2) upstream of the compressor (24), the line comprising means (55) for adjusting the flow of gas passing through the line (51) and controlled selection means (54) directing the recirculated gases either to the line (51), when the pressure prevailing downstream of the compressor (24) is higher than the pressure prevailing upstream of the turbine (32), to send the exhaust gases downstream of the compressor (24), or to its bypass (52), when the pressure prevailing downstream of the compressor (24) is lower than the pressure prevailing upstream of the turbine (32), to send the exhaust gases upstream of the compressor, and **in that** the line (51) comprises an air cooler (53).

2. Circuit for recirculating the exhaust gases of a supercharged internal combustion engine according to Claim 1, **characterized in that** the air cooler (53) is placed upstream of the flow adjusting means (55).

3. Circuit for recirculating the exhaust gases of a supercharged internal combustion engine according to Claim 2, **characterized in that** the adjusting means comprise a valve (55) placed upstream of the bypass.

4. Circuit for recirculating the exhaust gases of a supercharged internal combustion engine according to one of the preceding claims, **characterized in that** the blocking means comprise a three-way valve (54) blocking the line (51) when the bypass is open and vice versa.

5. Use of the exhaust gas recirculating circuit according to one of the preceding claims, **characterized in that** during the engine (1) supercharging phases, the adjusting means (55) are activated so that the exhaust gas recirculation rate at the intake is between 5 and 20%.

## Patentansprüche

1. Abgasrückführvorrichtung für eine aufgeladene fremdgezündete Brennkraftmaschine (1), wobei die Aufladung durch einen Kompressor (24) erzielt wird, dessen Drehachse (25) mit der Drehachse einer Turbine (32) gemein ist, die von den Abgasen angetrieben wird, wobei die Einlassvorrichtung (2) der Brennkraftmaschine eine Kühleinrichtung (22) für die Luft stromabwärts zum Kompressor (24) umfasst, **dadurch gekennzeichnet, dass** die Abgasrückführvorrichtung (5) eine Leitung (51) umfasst, die einerseits an den Auspuffsammler (30) stromaufwärts zur Turbine (32) und andererseits an die Einlassvorrichtung zwischen dem Kompressor (24) und dem Luftkühler (22) angeschlossen ist, wobei die Leitung (51) auch eine Abzweigung (52) umfasst, die die Leitung (51) an die Einlassvorrichtung (2) stromaufwärts zum Kompressor (24) anschließt, wobei die Leitung Mittel (55) zur Regulierung der durch die Leitung (51) strömenden Gasmenge und gesteuerte Auswahlmittel (54) umfasst, die die rezirkulierten Gase entweder in die Leitung (51) lenkt, wenn der stromabwärts zum Kompressor (24) herrschende Druck größer als der stromaufwärts zur Turbine (32) herrschende Druck ist, um die Abgase stromabwärts zum Kompressor (24) zu lenken, oder in seine Abzweigung (52) lenkt, wenn der stromabwärts zum Kompressor (24) herrschende Druck geringer als der stromaufwärts zur Turbine (32) herrschende Druck ist, um die Abgase stromaufwärts zum Kompressor zu lenken, und dass die Leitung (51) einen Luftkühler (53) umfasst.

2. Abgasrückführvorrichtung für eine aufgeladene fremdgezündete Brennkraftmaschine nach Anspruch 1, **dadurch gekennzeichnet, dass** der Luftkühler (53) stromaufwärts zu den Mitteln (55) zur Durchflussregulierung angeordnet ist.

3. Abgasrückführvorrichtung für eine aufgeladene fremdgezündete Brennkraftmaschine nach Anspruch 2, **dadurch gekennzeichnet, dass** die Regulierungsmittel ein Ventil (55) umfassen, das stromaufwärts zur Abzweigung angeordnet ist.

4. Abgasrückführvorrichtung für eine aufgeladene fremdgezündete Brennkraftmaschine nach einem der vorhergehenden Ansprüche, **dadurch gekennzeichnet, dass** die Verschlussmittel ein Dreiwegeventil (54) umfassen, das die Leitung (51) verschließt, wenn die Abzweigung offen ist und umgekehrt.

5. Verwendung der Abgasrückführvorrichtung nach einem der vorhergehenden Ansprüche, **dadurch gekennzeichnet, dass** während der Aufladungsphasen der Brennkraftmaschine (1) die Regulierungsmittel (55) betätigt werden, damit die Rückführrate der Abgase beim Einlass zwischen 5 und 20 % beträgt.
